# EUROPEAN PATENT APPLICATION

(11) **EP 1 699 210 A1**
(43) Date of publication of application: **06.09.2006**
(21) Application number: 06004394.0
(22) Date of filing: 03.03.2006
(51) Int. Cl.: H04M 1/02, H01M 2/10

(54) **Battery pack mounting apparatus for allowing replacement of the battery without switching off a portable terminal**

(30) Priority: 04.03.2005 KR 2005018069
(71) Applicant: Samsung Electronics Co., Ltd., Suwon-si, Gyeonggi-Do (KR)
(72) Inventor: Choi, Woo-Suk c/oSamsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a battery pack mounting apparatus for a portable terminal. The battery pack mounting apparatus includes a mounting recess and a battery pack. The mounting recess is formed on one surface of a terminal housing and extends through from one side of the terminal housing to the other side of the terminal housing. The battery pack is mounted in the mounting recess by sliding along a longitudinal direction that the mounting recess extends. Since a battery pack can be replaced while maintaining the power of a portable terminal in the ON state, the power can be stably provided to the portable terminal in spite of depletion of a battery during a long-duration operation. In addition, when a user has at least two battery packs, the portable terminal can be maintained in the ON state for a long period of time, regardless of battery capacity. Therefore, the power of the portable terminal can be maintained stable without mounting a large-capacity battery pack and increasing the size and weight of the portable terminal, thereby contributing to miniaturization and lightweight design of the portable terminal.

## Description

### BACKGROUND OF THE INVENTION

### 1. Field of the Invention

The present invention generally relates to a portable terminal, and in particular, to a battery pack mounting apparatus for a portable terminal, which allows a battery pack to be replaced while maintaining the ON-state of the portable terminal.

### 2. Description of the Related Art

A portable terminal generally has a battery pack mounted on the rear surface of its housing as a power source. The battery pack is prevented from being separated from the housing by a locking apparatus mounted on the main body of the portable terminal.

For mounting a battery pack, one end of the battery pack is typically engaged in a support groove of a terminal housing using a support protrusion and the battery pack is brought to a settling surface of the terminal housing, thereby being locked. As another method for mounting a battery pack, the battery pack may be slidably mounted on the rear surface of a terminal housing using a predetermined guide rib. These battery mounting methods may be easily understood by those skilled in the art.

Recently, a screen output through a colorized display device is provided in most portable terminals and a speaker through which a music file is reproduced and output to permit a user to listen to the output music file without the use of an earphone is also provided on most portable terminals. Not only multimedia services including the reproduction of a moving picture file such as a music video and photography but also the transmission of a large amount of data lead to an increasing need to maintain the power of a portable terminal for a long period of time.

However, a conventional battery pack mounting apparatus mounted in a portable terminal has a limited battery capacity and a battery pack can be replaced only after the power of the portable terminal is turned off. Complete depletion of a battery during the transmission of a large amount of data or the reproduction of a moving picture file interrupts the transmission or the reproduction. Moreover, since the power of the portable terminal is turned off during the replacement of the battery pack, a user has to reboot the portable terminal, which is troublesome to the user. To solve the problems, the power of the portable terminal may be maintained for a long period of time by increasing the battery capacity. However, such a solution goes against a trend toward miniaturization and making the terminal lightweight, and there exists a technical limit in the integration of a battery.

### SUMMARY OF THE INVENTION

It is, therefore, an object of the present invention to provide a battery pack mounting apparatus for a portable terminal, which allows a battery pack to be replaced while maintaining the ON state to stably supply power for a long period of time, regardless of a battery capacity.

To achieve the above and other objects, there is provided a battery pack mounting apparatus for a portable terminal. The battery pack mounting apparatus includes a mounting recess and a battery pack. The mounting recess is formed on one surface of a terminal housing and extends through from one side of the terminal housing to the other side of the terminal housing. The battery pack is mounted in the mounting recess by sliding along a longitudinal direction that the mounting recess extends.

### BRIEF DESCRIPTION OF THE DRAWINGS

The above and other objects, features and advantages of the present invention will become more apparent from the following detailed description when taken in conjunction with the accompanying drawings in which:
FIG. 1 is a perspective view of a portable terminal having a battery pack mounting apparatus according to a first embodiment of the present invention;
FIG. 2 is a perspective view of a battery pack of the portable terminal shown in FIG. 1;
FIG. 3 is a perspective view for explaining the replacement of a battery pack of the portable terminal shown in FIG. 1; and
FIG. 4 is a perspective view of a portable terminal having a battery pack mounting apparatus according to a second embodiment of the present invention.

### DETAILED DESCRIPTION OF THE PREFERRED EMBODIMENT

Preferred embodiments of the present invention will now be described in detail with reference to the annexed drawings. In the following description, a detailed description of known functions and configurations incorporated herein has been omitted for conciseness.

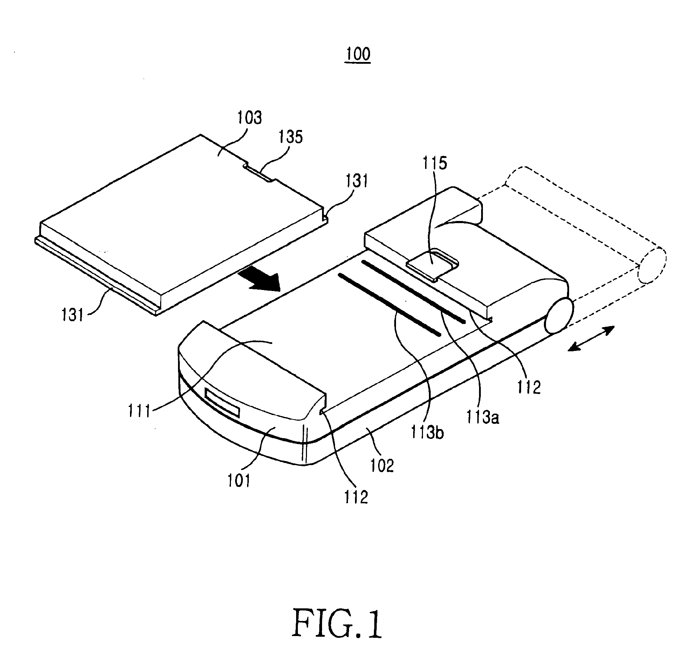

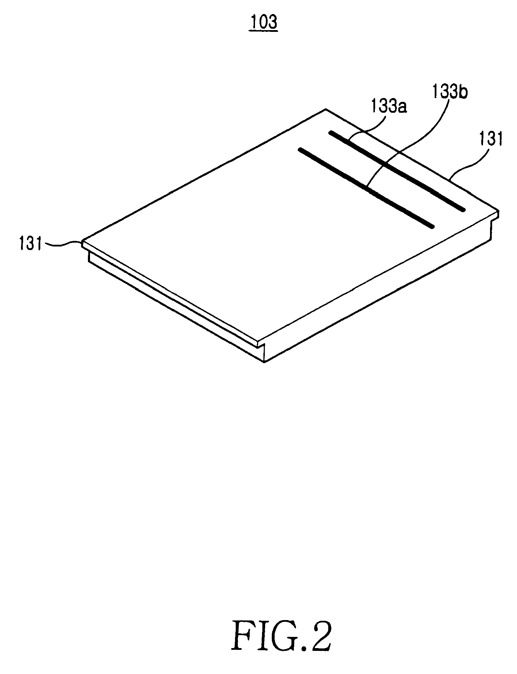

FIG. 1 is a perspective view of a portable terminal 100 having a battery pack mounting apparatus, and FIG. 2 is a perspective view of a battery pack 103 of the portable terminal 100 shown in FIG. 1. As shown in FIGs. 1 and 2, a battery pack mounting apparatus for the portable terminal 100 includes a mounting recess 111 formed on the portable terminal 100 and the battery pack 103 mounted by sliding movement on the mounting recess 111.

The portable terminal 100 includes a first housing 101 and a second housing 102 combined with the first housing 101 in opposition to the first housing 101. The portable terminal 100 may be of a sliding type where the first housing 101 is opened and closed by sliding movement of the second housing 102 on the first housing 101.

The first housing 101 includes a keypad and a transmitter (not shown) that are opened and closed by the second housing 102. The second housing 102 includes a display device and a receiver (not shown) on its front surface. A function key may be further mounted on the second housing 102 for some portable terminals.

The mounting recess 111 for mounting the battery pack 103 is formed on the rear surface of the first housing 101. The mounting recess 111 extends from one side of the first housing 101 to the other side of the first housing 101, and the battery pack 103 is engaged in the mounting recess 111 by sliding from one side of the first housing 101 to the other.

A guide groove 112 is formed at upper and lower sidewalls of the mounting recess 111 along a longitudinal direction that the mounting recess 111 extends. Power input terminals 113a and 113b are disposed on the bottom surface of the mounting recess 111 along the longitudinal direction that the mounting recess 111 extends. The power input terminals 113a and 113b are a pair of a positive(+)-pole terminal 113a and a negative(-)-pole terminal 113b.

A locking protrusion 115 that protrudes towards and on the mounting recess 111 is installed on the first housing 101. The locking protrusion 115 is elastically supported on the first housing 101 and is provided with an elastic force that acts in the direction of protruding out of the first housing 101 on the mounting recess 111.

The battery pack 103 includes a guide rail 131 at its upper and lower portions. The guide rail 131 is extruded from the upper and lower portions of the battery pack 103 and is slidably engaged in the guide groove 112. Thus, when at least one portion of the battery pack 103 is engaged in the mounting recess 111, the battery pack 103 can only slide on the mounting recess 111.

As seen in FIG. 2, power output terminals 133a and 133b are formed on a surface of the battery pack 103 facing the bottom surface of the mounting recess 111. The power output terminals 133a and 133b are a pair of a positive(+)-pole terminal 133a and a negative(-)-pole terminal 133b and are connected to the power input terminals 113a and 113b on the mounting recess 111. In other words, if at least one portion of the battery pack 103 is positioned on the mounting recess 111, the power output terminals 133a and 133b of the battery pack 103 and the power input terminals 113a and 113b on the mounting recess 111 can be maintained connected to each other.

The battery pack 103 includes a locking groove 135 corresponding to the locking protrusion 115. When the battery pack 103 is completely engaged in the mounting recess 111, the locking protrusion 115 is engaged in the locking groove 135 and thus restricts sliding movement of the battery pack 103.

As mentioned above, the battery pack 103 can only slide while at least one portion of the battery pack 103 is being engaged in the mounting recess 111, and sliding of the battery pack 103 is restricted by engagement of the locking protrusion 115 and the locking groove 135 while the battery pack 103 is being completely engaged in the mounting recess 111, thereby preventing the battery pack 103 from being separated from the first housing 101.

To replace the battery pack 103 or separate the same from the portable terminal 100, a user must slide the battery pack 103 after separating the locking protrusion 115 from the locking groove 135.

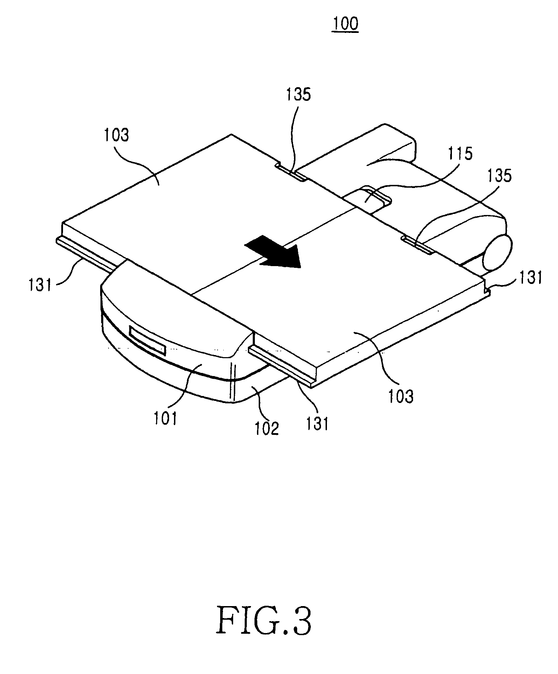

FIG. 3 is a perspective view for explaining the replacement of the battery pack 103 of the portable terminal 100 shown in FIG. 1. As shown in FIG. 3, when replacing the battery pack 103, a user may slidably engage a new battery pack 103 in the mounting recess 111 while the previous battery pack 103 is still mounted on the portable terminal 100.

Before slidably engaging the new battery pack 103 in the mounting recess 111, the user separates the locking protrusion 115 from the locking groove 135. If the user slidably engages the new battery pack 103 in the mounting recess 111 after the locking protrusion 115 is separated from the locking groove 135, the previous battery pack 103 mounted in the mounting recess 111 separates from the mounting recess 111 by sliding movement. While the previous battery pack 103 and the new battery pack 103 are replaced with each other, their portions are simultaneously positioned in the mounting recess 111. In other words, the power output terminals 133a and 133b of the previous battery pack 103 and the new battery pack 103 are simultaneously connected to the power input terminals 113a and 113b of the first housing 101. Therefore, during the replacement of the previous battery pack 103, the portable terminal 100 can be provided with power from the previous battery pack 103 and the new battery pack 103 that are connected in parallel.

After the new battery pack 103 is completely engaged in the mounting recess 111 by sliding movement, the locking protrusion 115 is engaged with the locking groove 135 and thus restricts further sliding movement of the new battery pack 103. As a result, the new battery pack 103 is entirely fixed to the first housing 101.

During the replacement of the previous battery pack 103, the power of the previous battery pack 103 being separated from the mounting recess 111 and the power of the new battery pack 103 being engaged in the mounting recess 111 are simultaneously provided to the portable terminal 100, thereby maintaining the portable terminal 100 in the ON state. Thus, the user can replace the previous battery pack 103 even while inputting information, transmitting a large amount of information, and enjoying a multimedia file using the portable terminal 100.

The length the power input terminals 113a and 113b and the power output terminals 133a and 133b extend can be set to various values. However, the lengths should be sufficiently large to supply the power of the previous battery pack 103 being separated from the mounting recess 111 and the new battery pack 103 being engaged in the mounting recess 111 to the portable terminal 100 during the replacement of the previous battery pack 103, the previous battery pack 103 and the new battery pack 103 being connected in parallel.

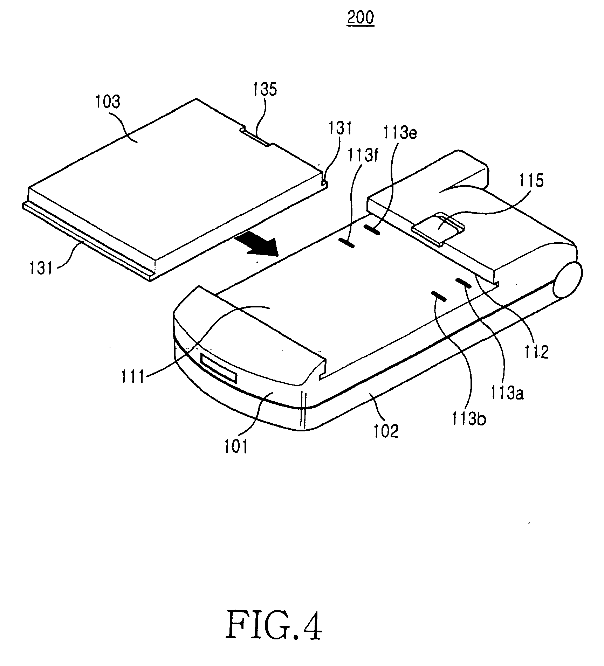

FIG. 4 is a perspective view of a portable terminal 200 having a battery pack mounting apparatus according to a second embodiment of the present invention. The battery pack mounting apparatus for the portable terminal 200 is configured in the similar manner as that for the portable terminal 100 except for the configuration of the power input terminals. Thus, in the description of the second embodiment of the present invention, like reference numerals may be used for like components throughout the first embodiment and the second embodiment of the present invention and a detailed description of the like components may be omitted.

In the battery pack mounting apparatus according to the second embodiment of the present invention, first power input terminals 113a and 113b and second input terminals 113e and 113f are installed on a mounting recess 111. The first power input terminals 113a and 113b and the second power input terminals 113e and 113f are pairs of positive(+)-pole terminals 113a and 113e and negative(-)-pole terminals 113b and 113f and are formed to be connected to power output terminals 133a and 133b of a battery pack 103 by sliding movement of the battery pack 103 on the mounting recess 111.

The first power input terminals 113a and 113b are positioned adjacent to one lateral end of the first housing 101 and the second power input terminals 113e and 113f are positioned adjacent to the other lateral end of the first housing 101. Thus, if the battery pack 103 is engaged in the mounting recess 111 by sliding from one side to the other side of the first housing 101, the first power output terminals 113a and 113b or the second power output terminals 113e and 113f are connected to the power output terminals 133a and 133b of the battery pack 103. If the battery pack 103 is completely engaged in the mounting recess 111, both the first power input terminals 113a and 113b and the second power input terminals 113e and 113f are connected to the power output terminals 133a and 133b of the battery pack 103.

Hereinafter, a description will be made regarding a process of replacing the previous battery pack 103 of the portable terminal 200 where the battery pack 103 is engaged in the mounting recess 111 from the side of the first power input terminals 113a and 113b.

To replace the previous battery pack 103 mounted on the portable terminal 200, a user first separates the locking protrusion 115 from the locking groove 135 of the previous battery pack 103. If the locking protrusion 115 is separated from the locking groove 135, the user slidably engages the new battery pack 103 in the mounting recess 111 from the side of the first power input terminals 113a and 113b.

As the new battery pack 103 is engaged in the mounting recess 111 by sliding, the previous battery pack 103 engaged in the mounting recess 111 is gradually separated from the mounting recess 111, connections of the power output terminals 133a and 133b of the previous battery pack 103 with the first power input terminals 113a and 113b are interrupted, and the power output terminals 133a and 133b of the new battery pack 103 being engaged in the mounting recess 111 by sliding are connected to the first power input terminals 113a and 113b. In other words, one battery pack (the previous battery pack 103) continues to supply the power to the portable terminal 200 through the second power input terminals 113e and 113f, and the other battery pack (the new battery pack 103) is connected to the first power input terminals 113a and 113b and starts to supply the power to the portable terminal 200.

If the new battery pack 103 is completely engaged in the mounting recess 111, its power output terminals 133a and 133b are connected to both the first power input terminals 113a and 113b and the second power input terminals 113e and 113f and the previous battery pack 103 mounted in the mounting recess 111 is completely separated from the mounting recess 111.

As mentioned above, the power output terminals 133a and 133b extend along a direction that the new battery pack 103 is engaged by sliding, and the first power input terminals 113a and 113b and the second power input terminals 113e and 113f are formed to be connected to the power output terminals 133a and 133b. The first power input terminals 113a and 113b and the second power input terminals 113e and 113f are formed to be connected to the power output terminals of the previous battery pack 103 and the new battery pack 103 during the replacement of the previous battery pack 103. Thus, at least one of the previous battery pack 103 and the new battery pack 103 can provide power to the portable terminal 100 during the replacement of the previous battery pack 103 and the battery pack 103 can be replaced with the new battery pack 103 while the portable terminal 100 is maintained in the ON state.

The power output terminals 133a and 133b are configured as a pair and the first power input terminals 113a and 113b and the second power input terminals 113e and 113f are configured as two pairs according to the second embodiment of the present invention, but power output terminals may be configured as two pairs and power input terminals may be configured as a single pair that extends along a direction the battery pack 103 slides.

As described above, according to the present invention, it is possible to replace a previous battery pack while maintaining a portable terminal in the ON state by slidably engaging a new battery pack in a mounting recess while the previous battery pack is mounted in the mounting recess. Thus, the power can be stably provided to the portable terminal in spite of depletion of a battery during a long-duration operation such as the transmission of a large amount of data or the reproduction of a moving picture file. Moreover, when a user has at least two battery packs, the portable terminal can be maintained in the ON state for a long period of time, regardless of battery capacity. In addition, if the user has a plurality of battery packs, even though the battery packs have a small capacity, the power of the portable terminal can be maintained stable without having to mount a large-capacity battery pack and increase the size and weight of the portable terminal, thereby contributing to miniaturization and lightweight design of the portable terminal.

While the invention has been shown and described with reference to certain preferred embodiments thereof, it will be understood by those skilled in the art that various changes in form and details may be made therein without departing from the scope of the invention. For example, in preferred embodiments of the present invention, a battery pack mounting apparatus is used for a sliding-type portable terminal, but it may also be applied to various types of portable terminals such as a bar-type portable terminal and a folder-type portable terminal and to various portable devices such as a portable computer and a Personal Digital Assistant (PDA).

## Claims

1. A battery pack mounting apparatus for a portable terminal (100), comprising:
a mounting recess (111) formed on one surface of a terminal housing (101) and extending in longitudinal direction from one side of the terminal housing to the other side of the terminal housing, and
a battery pack (103) adapted to be mounted in the mounting recess by sliding along said longitudinal direction that the mounting recess (111) extends.

2. The battery pack mounting apparatus according to claim 1, wherein the battery pack (103) is engaged in the mounting recess (111) by sliding from one of the one side or the other side of the terminal housing.

3. The battery pack mounting apparatus according to claim 1 or 2, further comprising:
at least one input terminal (113a,b; e,f) formed on the mounting recess (111) and extending along the longitudinal direction, and
at least one power output terminal (133a,b) formed on each battery pack (103) and extending along a direction that the battery pack slides to correspond to the at least one input terminal (113a,b; e,f),
wherein if at least one portion of the battery pack is engaged or is still engaged in the mounting recess by sliding, the at least one power input terminal and the at least one power output terminal are connected to each other.

4. The battery pack mounting apparatus according to claim 3, wherein each of the at least one power input terminal (113a,b; e,f) and the at least one power output terminal (133a,b) is a pair of a positive(+)-pole terminal (113a,e) and a negative(-)-pole terminal (113b,f).

5. The battery pack mounting apparatus according to one of the previous claims, comprising:
pairs of first power input terminals (113a,b) and second power input terminals (113e,f) formed on the mounting recess (111) and positioned adjacent to both sides of the terminal housing (101), respectively, and a pair of power output terminals (133a,b) formed on the battery pack (103) and extending in the direction that the battery pack slides to correspond to the first power input terminals and the second power input terminals,
wherein if a new battery pack is engaged in the mounting recess by sliding, the battery pack mounted in the mounting recess gradually separates from the mounting recess by its sliding movement.

6. The battery pack mounting apparatus according to claim 5, wherein the power output terminals (133a,b) are connected to both of the first power input terminals (113a,b) and the second power input terminals (113e,f) while the battery pack (103) is mounted in the mounting recess.

7. The battery pack mounting apparatus according to claim 5, wherein as the new battery pack (103) is engaged in the mounting recess by sliding, connections of the power output terminals (133a,b) of the battery pack (103) still mounted in the mounting recess to the first power input terminals (113a,b) or the second power input terminals (113e,f) are interrupted by the gradual separation of the mounted battery pack from the mounting recess, and power output terminals of the new battery pack engaged in the mounting recess by sliding are connected to the first power input terminals or the second power input terminals, respectively,
wherein the portable terminal is provided with power from the battery pack and the new battery pack that are connected to the input terminals in parallel.

8. The battery pack mounting apparatus according to one of claims 5 to 7, wherein each of the first power input terminals (113a,b) and the second power input terminals (113e,f) is a pair of a positive(+)-pole terminal (113a,e) and a negative(-)-pole terminal (113b,f).

9. The battery pack mounting apparatus according to one of the previous claims, further comprising:
a locking protrusion (115) which is elastically supported on the terminal housing (101) and protrudes towards the mounting recess (111), and
a locking groove (135) formed on the battery pack (103) and engaged with the locking protrusion (115), when the battery pack is mounted in the mounting recess (111).

10. The battery pack mounting apparatus according to one of the previous claims, further comprising:
a guide groove (112) formed at least at one sidewall of the mounting recess (111) and extending along the longitudinal direction, and
at least one guide rail (131) formed on upper and/or lower portions of the battery pack to slidably engage the guide groove.
